# EUROPÄISCHE PATENTSCHRIFT

(11) **EP 1 373 722 B1**
(45) Veröffentlichungstag und Bekanntmachung des Hinweises auf die Patenterteilung: **18.06.2008**
(21) Anmeldenummer: 02706761.0
(22) Anmeldetag: 14.03.2002
(51) Int. Cl.: F03D 7/04, F03D 11/00

(54) **TURMSCHWINGUNGSÜBERWACHUNG**
TOWER OSCILLATION MONITORING DEVICE
SURVEILLANCE DES VIBRATIONS D'UNE TOUR

(30) Priorität: 17.03.2001 DE 10113038
(43) Veröffentlichungstag der Anmeldung: 02.01.2004
(60) Teilanmeldung: 07123090.8
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/002847
(87) Internationale Veröffentlichungsnummer: WO 2002/075153

(56) Entgegenhaltungen:
- EP-A- 0 490 805
- WO-A-01/77524
- WO-A-83/01490
- US-A- 4 420 692
- US-A- 5 978 972
- THIRINGER T ET AL: "Periodic pulsations from a three bladed wind turbine" IEEE TRANSACTIONS ON ENERGY CONVERSION, [Online] Bd. 16, Nr. 2, Juni 2001 (2001-06), Seiten 128-133, XP002200579 ISSN: 0885-8969 [gefunden am 2002-05-29]
- LARWOOD S. ET AL: 'Dynamic Characterization of the AWT-26 Turbine for Variable Speed Operation' NREL Nr. NREL/TP-500-24919, Juli 1998, Seiten 1 - 13
- HAU E.: 'Windkraftanlagen', SPRINGER VERLAG, 1988 * Seite 470 - Seite 471 *
- ALTENMARK J.: 'Bedeutung von Schwingungswächtern in Windenergieanlagen' ERNEUEBARE ENERGIEN 5.2000,

## Beschreibung

Die vorliegende. Erfindung betrifft Verfahren zus Steuerung einer Windenergie-anlage gemäss dem Oberbegriff des Anspruchs 1. Die Erfindug betrifft weiterhin eine Windenergieanlage, gemäss dern Oberbegriff des Anspruchs 10.

An der Spitze des Turmes einer Windenergieanlage vom Horizontalachsentyp befindet sich der Generator, der gesamte Antriebsstrang und der Rotor, also alle beweglichen Teile einer Windenergieanlage, die dem Wind Energie entziehen und diese in elektrische Energie umwandeln.

Die Umwandlung erfolgt, in dem der Rotor durch den Wind in Rotation versetzt und diese Rotation auf den oder die Generator(en) übertragen wird. Daher ist die Rotationsgeschwindigkeit einerseits vom Wind und andererseits von den aerodynamischen Eigenschaften der Windenergieanlage abhängig.

Aus dem Vorstehenden ergibt sich, dass der Turm daher nicht nur Rotor, Antriebsstrang und Generator (und Gondel) tragen, sondern darüber hinaus auch den im Betrieb einwirkenden Lasten sicher standhalten muss. Weiterhin muss der Turm hohen Windgeschwindigkeiten standhalten, auch wenn die Windenergieanlage bereits außer Betrieb ist.

Aus DE 33 08 566 sowie der parallelen US-Anmeldung US-A-4,435,647 ist eine Windturbinenanlage bekannt, bei welcher auf dem Turm eine Bewegungsmessvorrichtung angeordnet ist, die ein Bewegungssignal erzeugt, je nachdem, wie sich die Turmspitze im Betrieb bewegt.

Aus DE 100 11 393 ist ein Regelungssystem für eine Windkraftanlage bekannt, mit Mitteln zur Erfassung von Messgrößen, die eine direkte oder indirekte Quantifizierung der aktuellen standort- und witterungsabhängigen Turbinenbelastung und/oder -beanspruchung ermöglichen und eine nachgeschaltete elektronische Signalverarbeitungsanlage, die es ermöglicht, die bei optimierten Windkraftanlagen erforderliche Leistungsreduzierung im Bereich der Nennwindgeschwindigkeit und bei hohen Windgeschwindigkeiten auf das den aktuellen Betriebsbedingungen entsprechende wirtschaftliche Optimum einzuschränken.

Aus Erich Hau "Windkraftanlagen", 1988 (Seiten 470, 471) ist bekannt, zur Schwingungsüberwachung einer Windkraftanlage einen Beschleunigungsmesser mit einem Auswertungs-Prozessor einzusetzen, um bei Überschreitung von festgesetzten Grentwerten ein Sicherheitssystem der Windkraftanlage zu aktivieren. Aus NREL "Dynamic Characterization of the AWT-26 Turbine for Variable Speed Operation", Juli 1998, ist bekannt zwei verschiedene Schwingungen mit um 90° versetzten Beschleunigungsmessern zu erfassen.

Aus DE 100 16 912 ist eine turmeigenfrequenzabhängige Betriebsführung von Offshore-Windenergieanlagen bekannt, wobei zunächst die jeweiligen kritischen Eigenfrequenzen der Anlage und/oder Anlagenteile bestimmt werden, hiernach der Drehzahlbereich des Rotors bestimmt wird, in dem eine Erregung der Gesamtanlage und/oder einzelner Anlagenteile im Bereich deren kritischen Eigenfrequenzen erfolgt, so dass die Windenergieanlage nur unterhalb oder oberhalb des kritischen Drehzahlbereichs unter schnellem Durchfahren des kritischen Drehzahlbereichs betrieben wird.

Aus diesen Belastungen werden daher bestimmte Lastfälle abgeleitet, für welche der Turm ausgelegt sein muss. Diese Lasten werden als dimensionierende Lasten bezeichnet und bestimmen eben die Dimensionierung des Turmes. Aus dieser Dimensionierung ergibt sich wiederum auch das Schwingungsverhalten des Turmes, seine Eigenfrequenzen (die Grundfrequenz sowie deren Harmonische), usw.

Nun gibt es für Windenergieanlagen eine Reihe von Vorschriften, die sie einhalten müssen. Dazu gehört auch eine "Richtlinie für Windkraftanlagen", herausgegeben vom Deutschen Institut für Bautechnik (DIBt) in Berlin. In dieser Richtlinie gibt es u. a. eine Vorschrift zur betrieblichen Schwingungsüberwachung des Turmes. Demnach ist in einem Betriebsbereich, in welchem die Erregerfrequenz des Rotors in einer Bandbreite der Eigenfrequenz des Turmes +/- 5 % liegt, ein dauernder Betrieb ohne eine betriebliche Schwingungsüberwachung unzulässig.

Aufgabe der vorliegenden Erfindung ist es daher, ein Verfahren und eine Windenergieanlage der eingangs genannten Art derart weiterzubilden, dass eine zuverlässige und effiziente Schwingungsüberwachung verwirklicht wird, um den oben genannten Frequenzbereich für den Betrieb der Windenergieanlage zu erschlie-ßen.

Diese Aufgabe wird erfindungsgemäß mit einem Verfahren nach Anspruch 1 sowie einer Windenergieanlage mit den Merkmalen nach Anspruch 11 gelöst. Vorteilhafte Weiterbildungen sind in den Unteransprüchen beschrieben. Die Erfindung beruht auf dem Ansatz, nicht nur die Schwingungsfrequenzen - wie im Stand der Technik - zu erfassen, sondern vor allem auch die Schwingungsamplituden, also den Schwingungsweg zu ermitteln. Schließlich kann eine Windenergieanlage auch in einem kritischen Frequenzbereich betrieben werden, solange dort die Schwingungsamplituden einen bestimmten Grenzwert nicht überschreiten.

Der Erfindung liegt die Erkenntnis zugrunde, dass bei allen nicht erzwungenen Schwingungen des Turmes die Schwingungen mit der ersten Eigenfrequenz des Turmes die größte Amplitude aufweisen und damit die größte Belastung für den Turm darstellen. Schwingungen mit Harmonischen der ersten Eigenfrequenz weisen stets kleinere Amplituden auf. Anteile von Beschleunigungen mit einer Harmonischen der ersten Eigenfrequenz des Turmes, die in die Ermittlung des Schwingweges einfließen, weisen zwar eine kleinere Amplitude auf, werden aber auf der Basis der ersten Eigenfrequenz in die Berechnung einbezogen und deshalb überbewertet.

Daraus ergibt sich, dass der Schwingweg im Wesentlichen proportional zu den Lasten ist und die aus dem Schwingweg abgeleiteten Lasten eher höher als die tatsächlich einwirkenden Lasten sind. Die Lasten werden also eher überbewertet als unterbewertet. Die Lasterfassung ergibt damit eine erhöhte Sicherheit.

Im Falle von parallel zur Rotorebene verlaufenden, also erzwungenen Schwingungen kann die Frequenz der Schwingung signifikant unterhalb der ersten Turmeigenfrequenz liegen. Eine Ermittlung der Belastung auf der Basis der ersten Turmeigenfrequenz führt hierbei sicher zu einer Unterbewertung des Schwingweges. Um diese Unterbewertung zu vermeiden, wird die Schwingfrequenz im laufenden Betrieb überwacht und bei Bedarf für die Ermittlung des Schwingweges mit einem korrigierten Wert verwendet.

Wird ein Schwingweg ermittelt, der einen ersten Grenzwert überschreitet, der also eine erste Last überschreitet, wird eine Gefährdung erkannt und die Steuerungsvorrichtung reagiert darauf. Ebenso wird eine Gefährdung erkannt, wenn ein zweiter Grenzwert des Schwingweges innerhalb einer vorgebbaren Zeitspanne überschritten wird. Um diese Gefährdung sicher zu beseitigen, kann die Anlage angehalten werden.

Weiterhin wird die Aufgabe gelöst durch eine Windenergieanlage gemäß dem Anspruches 10.

In einer bevorzugten Weiterbildung der Erfindung umfasst die Windenergieanlage eine Vorrichtung zur Überwachung der Vorrichtung zur Erfassung von Beschleunigungen des Turmes. Dadurch kann ein Ausfall der Schwingungsüberwachung erkannt und Maßnahmen zur Beseitigung der Störung eingeleitet und die Windenergieanlage angehalten werden, damit nicht unkontrolliert Schwingungen auftreten können.

Weitere vorteilhafte Ausführungsformen der Erfindung sind in den Unteransprüchen angegeben.

Nachfolgend wird eine Ausführungsform der Erfindung anhand der en detailliert beschrieben. Dabei zeigen:
- Fig. 1: eine Draufsicht auf die Gondel mit zwei Beschleunigungssensoren; und
- Fig. 2: ein Flussdiagramm des Steuerungsvorganges in einer ersten Ausführungsform der Erfindung.

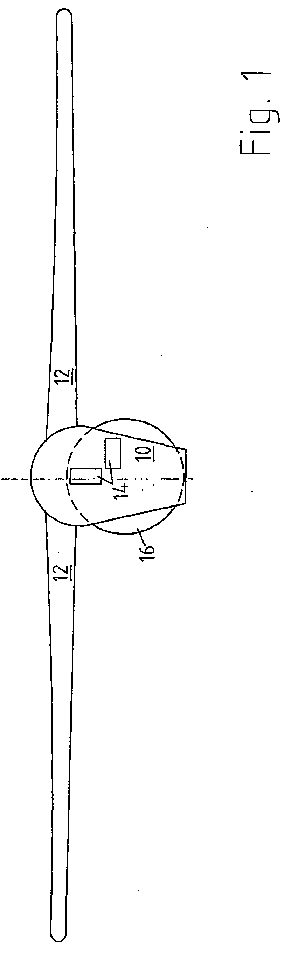

Die Draufsicht in Fig. 1 zeigt eine Gondel 10, von der aus sich seitlich Rotorblätter 12 erstrecken. Die Gondel ist an der Spitze eines Turmes 16 angeordnet. Im Inneren der Gondel 10 befindet sich eine Messvorrichtung 14 mit zwei Beschleunigungssensoren. Diese Beschleunigungssensoren sind in einer horizontalen Ebene ausgerichtet und weisen einen rechten Winkel zueinander auf. Durch diese Anordnung können Turmschwingungen in den entsprechenden Richtungen, also einmal in etwa parallel zu der Rotorblattebene und zum anderen senkrecht zu der Rotorblattebene erfasst werden.

Schwingungen mit der Eigenfrequenz des Turmes 16, die z. B. durch Windlasten angeregt werden, sind stets Schwingungen senkrecht zur Rotorebene, die durch einen entsprechend ausgerichteten Beschleunigungssensor 14 erfasst werden. Erzwungene Schwingungen, die z. B. durch Unwuchten am Rotor entstehen können, sind Schwingungen, die im Wesentlichen parallel zur Rotorebene ablaufen. Diese werden durch einen zweiten Beschleunigungssensor 14 erfasst. Dabei laufen solche erzwungenen Schwingungen keineswegs mit der 1. Eigenfrequenz des Turmes 16 bzw. einer Harmonischen davon ab. Sie werden dem Turm 16 aufgezwungen und können derart große Amplituden erreichen, dass eine sofortige Abschaltung erforderlich ist.

Dabei gestattet die Überwachung des Schwingweges senkrecht zur Rotorebene auch eine Überwachung der Steuerung des Anstellwinkels der Rotorblätter, denn das Schwingverhalten des Turmes bei einwandfrei arbeitender Steuerung des Rotorblatt-Anstellwinkels unterscheidet sich erheblich von dem. Schwingverhalten bei nicht einwandfreier Steuerung. Daher treten auch bei nicht einwandfreier Steuerung des Rotorblatt-Anstellwinkels Schwingungen auf, die zu einer Abschaltung führen können.

Gegebenenfalls können die ermittelten Schwingungsdaten auch mit den Windrichtungsdaten verknüpft werden, so dass auch ein Zusammenhang darüber ermittelt werden kann, ob bei bestimmten Windrichtungen sich größere Schwingungswege als in anderen Windrichtungen eingestellt haben. Schließlich hat u.U. die die Windenergieanlage umgebende Landschaftsgeografie auch Auswirkungen - bei gleichbleibender Windgeschwindigkeit -, je nachdem aus welcher Windrichtung der Wind kommt.

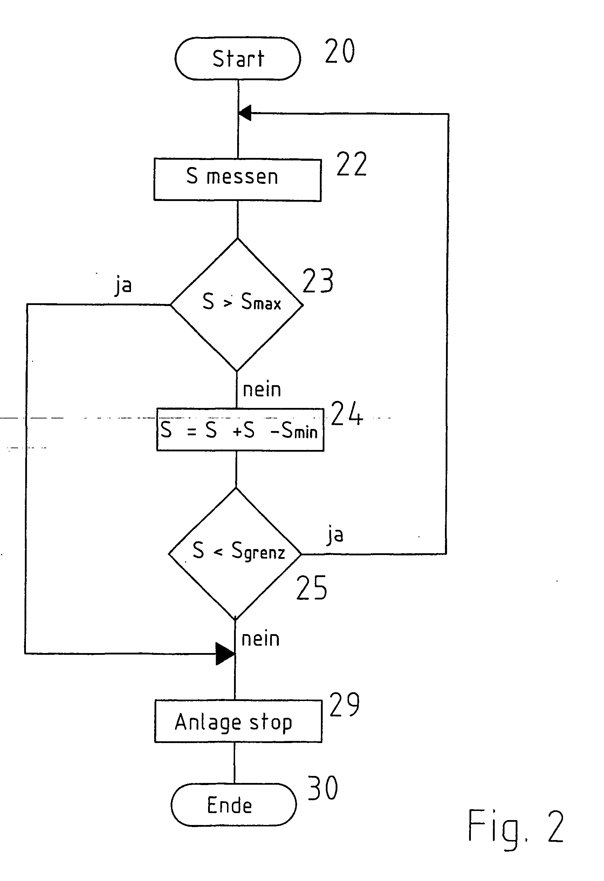

Fig. 2 zeigt ein Flussdiagramm, dass den Ablauf des erfindungsgemäßen Verfahrens zur Steuerung der Windenergieanlage verdeutlicht. Der Ablauf beginnt mit Schritt 20. Im nachfolgenden Schritt 22 erfolgt eine Erfassung der Schwingung des Turmes durch die Beschleunigungssensoren 10, 14. Die Schwingungserfassung erfolgt für einen Zeitraum von 20 Sekunden. Dabei werden in diesen 20 Sekunden sämtliche Beschleunigungen kumuliert. Nach Ablauf dieses Zeitintervalls wird aus der Summe aller Beschleunigungen und der ersten Eigenfrequenz des Turmes der Effektivwert des Schwingweges in Nabenhöhe nach der Formel S(eff)=a(eff)/w² berechnet. Dabei ist S(eff) der Effektivwert des Turmschwingweges, a(eff) ist der Effektivwert aller Beschleunigungen über einen Zeitintervall von 20 Sekunden und w² ist das Quadrat von 2nf, wobei f die erste Eigenfrequenz des Turmes darstellt. Der Wert von S(eff) wird dann mit v2 multipliziert, um die Schwingungsamplitude zu erhalten, also die durchschnittliche Auslenkung des Turmes aus der Ruhelage.

Die erste Eigenfrequenz des Turmes ist in der Regel durch Messungen bzw. Berechnungen relativ genau bekannt, so dass dieser Wert bei einer Neuinbetriebnahme für die Berechnung des Schwingweges zunächst herangezogen wird. Da jedoch in Abhängigkeit von fertigungsbedingten Toleranzen der Steifigkeit des Turmes bzw. unterschiedlicher Gründungsarten die tatsächliche Turmeigenfrequenz vom theoretischen Wert abweichen kann, wird durch die Steuerungsvorrichtung beim Auftreten von Turmschwingungen, die in den Berechnungen verwendete Turmeigenfrequenz durch die Auswertung der Periodendauer des Signals der Beschleunigungssensoren allmählich korrigiert. Dadurch passt sich die Messung des Schwingweges den jeweiligen Verhältnissen einer Anlage an.

Für das weitere Verfahren werden noch eine Reihe von Grenzwerten festgelegt, die im Rahmen einer Auswertung des erfassten Schwingweges berücksichtigt werden. Ein erster Grenzwert Sₘₐₓ bestimmt einen maximal zulässigen Schwingweg. Dieser sei in dem vorliegenden Beispiel 500 mm. Ein zweiter Grenzwert definiert einen minimal zulässigen Schwingweg Sₘᵢₙ. Dieser betrage im vorliegenden Beispiel 220 mm. Ein dritter Grenzwert bestimmt die Abschaltgrenze und wird stets dann als Abschaltkriterium herangezogen, wenn zwar der erste Grenzwert Sₘₐₓ nicht überschritten wird, der zweite Grenzwert Sₘᵢₙ jedoch überschritten wird. Dieser dritte Grenzwert erhält die Bezeichnung S_{grenz} und sein numerischer, einheitenloser Wert ist z. B. 1 612 800.

In Schritt 23 des Flussdiagrammes in Fig. 2 wird jetzt geprüft, ob der ermittelte Schwingweg den ersten Grenzwert Sₘₐₓ überschreitet. Ist dies der Fall, wird in Schritt 29 die Anlage sofort angehalten und der Ablauf endet.

Ergibt die Prüfung in Schritt 23, dass der Schwingweg den ersten Grenzwert Sₘₐₓ nicht überschreitet, wird in Schritt 24 des Flussdiagrammes die Summe der Quadrate der gesamten Schwingwege gebildet. Dazu wird der im Zeitintervall erfasste Schwingweg S quadriert und von diesem wird das Quadrat des zweiten Grenzwertes Sₘᵢₙ, also Sₘᵢₙ², subtrahiert. Die sich daraus ergebende Differenz wird zu der bereits in den vorausgehenden Intervallen ermittelten Summe addiert.

Daraus ergibt sich frühestens eine Abschaltung der Anlage, wenn der gemessene Schwingweg über 8 Messintervalle gleich dem maximal zulässigen Schwingweg Sₘₐₓ ist. Schwingwege, die zwischen dem minimalen und dem maximalen Schwingweg liegen, führen durch die quadratische Summenbildung und Abhängigkeit der Amplitude des Schwingweges zu einer überproportionalen Verkürzung der Abschaltzeiten. Wird der minimale Schwingweg (zweiter Grenzwert Sₘᵢₙ) unterschritten, sinkt die Summe der Schwingweg-Quadrate. Wird nun der dritte Grenzwert S_{grenz} durch die Summe der Quadrate erreicht oder überschritten, wird die Anlage wiederum angehalten.

Es ist auch möglich, die Anlage statt sofort anzuhalten eventuell auch so zu betreiben, dass der erste Grenzwert Sₘₐₓ danach umgehend sinkt. Hierzu kann beispielsweise eine Verstellung der Rotorblätter oder das Herausdrehen der Gondel aus dem Wind (store) durchgeführt werden. Eine Maßnahme kann auch sein, die Rotorblattdrehzahl heraufzusetzen, so dass die Anlage aus dem kritischen Bereich ihrer eigenen Frequenz herauskommt.

In der vorstehenden Anmeldung ist insbesondere die Verwendung von Beschleunigungssensoren zur Ermittlung des Schwingweges (Schwingungsamplitude) aufgezeigt. Es können auch andere Einrichtungen verwendet werden, um den Schwingweg (Amplitude) zu ermitteln. Der Fachmann wird sich im Bedarfsfall einer für den jeweiligen Einsatz geeigneten Einrichtung bedienen. Alternativ zu den Beschleunigungssensoren und alternativ zur Ermittlung des Schwingungsweges mittels Beschleunigungssensoren kann auch eine optische Messung durchgeführt werden, was hier regelmäßig jedoch recht aufwendig ist.

Alternativ zu einer Beschleunigungsmesseinrichtung lässt sich die Schwingung des Turmes unter Umständen auch durch Dehnungsmessstreifen am Turmfuß der Windenergieanlage feststellen. Hierzu sollten wenigstens zwei Dehnungsmessstreifen, in etwa um 90° gegenüber versetzt im Turmfußbereich angebracht sein. Solche Dehnungsmessstreifen können nicht nur die Dehnung, sondern auch die Stauchung des Materials erfassen. Je größer hierbei die Schwingungsamplitude des Turmes ist, umso größer ist auch die entsprechende Dehnung/Stauchung im Bereich der Dehnungsmessstreifen, die bevorzugt in der Hauptwindrichtung der Windenergieanlage ausgerichtet sind. Mit solchen Dehnungsmessstreifen lassen sich nicht nur Belastungen des Turmes im Bereich des Turmfußes messen, sondern auch ableiten, wie groß die Auslenkung des Turms im Bereich der Gondel bzw. des Turmkopfes ist, da je nach Auslenkungsamplitude des Turmkopfes auch die Belastung im Bereich des Turmfußes zunimmt. Selbstverständlich könnten die vorbeschriebenen Dehnungsmessstreifen (oder ein anderer Sensor, der die Belastung des Turmes feststellt) auch in anderen Bereichen des Turmes angebracht sein, z.B. auch auf halber Höhe des Turmes.

## Patentansprüche

1. Verfahren zur Steuerung einer Windenergieanlage, mit einem Turm (16), einer Steuereinrichtung zur Betriebsführung der Windenergieanlage oder Teile hiervon, wobei Mittel (14) vorgesehen sind, mit denen eine Schwingung des Turms (16) der Windenergieanlage erfasst wird, **dadurch gekennzeichnet, dass** die Mittel zur Erfassung der Turmschwingung den Schwingweg bzw. die absolute Auslenkung des Turms (16) im oberen Teil des Turms (16) aus seiner Ruhelage erfassen und die von dem Mittel (14) zur Erfassung der Turmschwingung ermittelten Werte in der Steuerungseinrichtung verarbeitet werden und zwar derart, dass die Betriebsführung der Windenergienanlage oder Teile hiervon verändert wird, wenn der Schwingweg bzw. die absolute Auslenkung des Turms (16) einen vorgebbaren ersten Grenzwert überschreitet, und zwei Schwingwege in wenigstens zwei verschiedenen Richtungen in einer im Wesentlichen horizontalen Ebene erfasst werden.

2. Verfahren nach Anspruch 1,
**dadurch gekennzeichnet, dass** die Einrichtung zur Ermittlung der Schwingung des Turmes wenigstens eine Beschleunigungsmesseinrichtung (14) aufweist.

3. Verfahren nach Anspruch 1 oder 2,
**dadurch gekennzeichnet, dass** zum Ermitteln des Schwingweges die erste Turmeigenfrequenz herangezogen wird.

4. Verfahren nach einem der vorstehenden Ansprüche,
**dadurch gekennzeichnet, dass** die Rotoreinstellung verändert wird, wenn der Schwingweg einen vorgebbaren ersten Grenzwert überschreitet.

5. Verfahren nach einem der Ansprüche 1 - 3,
**dadurch gekennzeichnet, dass** die Rotoreinstellung verändert wird, wenn der Schwingweg einen vorgebbaren Grenzwert innerhalb einer vorgebbaren Zeitspanne überschreitet.

6. Verfahren nach Anspruch 5.
**dadurch gekennzeichnet, dass** die Zeitspanne abhängig vom Betrag des Schwingweges verändert wird.

7. Verfahren nach einem der Ansprüche 4 - 6,
**dadurch gekennzeichnet, dass** der Rotor angehalten wird.

8. Verfahren nach einem der vorstehenden Ansprüche,
**dadurch gekennzeichnet, dass** wenigstens ein Parameter zur Ermittlung des Schwingweges zunächst vorgegeben und im laufenden Betrieb anhand der tatsächlich erfassten Messwerte korrigiert wird.

9. Verfahren nach einem der vorstehenden Ansprüche,
**dadurch gekennzeichnet, dass** der Schwingweg während eines vorgebbaren Zeitabschnittes ermittelt wird.

10. Windenergieanlage mit einem Turm (16) und einer Steuerungseinrichtung zur
Betriebsführung der Windenergieanlage sowie einer Einrichtung (14) zur Erfassung des Schwingweges des Turmes aus Anspruch 1.

11. Windenergieanlage nach Anspruch 10,
**dadurch gekennzeichnet, dass** als Einrichtung zur Ermittlung des Schwingweges eine Einrichtung (14) zur Erfassung der Beschleunigung des Turms vorgesehen ist und der Schwingwed des Turmes aus der erfassten Beschleunigung ermittelt wird.

12. Windenergieanlage nach Anspruch 11, **gekennzeichnet durch** eine Einrichtung zur Überwachung der Vorrichtung zur Erfassung von Beschleunigungen des Turmes.

## Claims

1. Method for controlling a wind power installation comprising a tower (16), a control apparatus for operational management of the wind power installation or parts thereof, wherein means (14) are provided with which oscillation of the tower (16) of the wind power installation is detected,
**characterised in that** the means for detecting oscillation of the tower detect the oscillation travel and/or the absolute deflection of the tower (16) in the upper portion of the tower (16) from its rest position, and the values ascertained by the means (14) for detecting oscillation of the tower are processed in the control apparatus, this being done in such a way that the operational management of the wind power installation or parts thereof is altered if the oscillation travel and/or the absolute deflection of the tower (16) exceeds a predeterminable first limit value, and two oscillation travels are detected in at least two different directions in a substantially horizontal plane.

2. Method according to claim 1,
**characterised in that** the device for ascertaining the oscillation of the tower has at least one acceleration measuring device (14).

3. Method according to claim 1 or 2,
**characterised in that** the first natural frequency of the tower is used for ascertaining the oscillation travel.

4. Method according to any one of the preceding claims,
**characterised in that** the rotor setting is altered if the oscillation travel exceeds a predeterminable first limit value.

5. Method according to any one of claims 1 to 3,
**characterised in that** the rotor setting is altered if the oscillation travel exceeds a predeterminable limit value within a predeterminable period of time.

6. Method according to claim 5,
**characterised in that** the period of time is altered in dependence on the magnitude of the oscillation travel.

7. Method according to any one of claims 4 to 6,
**characterised in that** the rotor is stopped.

8. Method according to any one of the preceding claims,
**characterised in that** at least one parameter for ascertaining the oscillation travel is first predetermined and is corrected during operation on the basis of the actually detected measurement values.

9. Method according to any one of the preceding claims,
**characterised in that** the oscillation travel is ascertained during a predeterminable time segment.

10. Wind power installation having a tower (16) and a control apparatus for operational management of the wind power installation, and a device (14) for detecting the oscillation travel of the tower, wherein means (14) are provided with which oscillation of the tower (16) of the wind power installation is detected,
**characterised in that** the means for detecting oscillation of the tower detect the oscillation travel and/or the absolute deflection of the tower (16) in the upper portion of the tower (16) from its rest position, and the values ascertained by the means (14) for detecting oscillation of the tower are processed in the control apparatus, this being done in such a way that the operational management of the wind power installation or parts thereof is altered if the oscillation travel and/or the absolute deflection of the tower (16) exceeds a predeterminable first limit value, and two oscillation travels are detected in at least two different directions in a substantially horizontal plane.

11. Wind power installation according to claim 10,
**characterised in that** a device (14) for detecting the acceleration of the tower is provided as the device for ascertaining the oscillation travel, and the oscillation travel of the tower is ascertained from the detected acceleration.

12. Wind power installation according to claim 11,
**characterised by** a device for monitoring the device for detecting accelerations of the tower.

## Revendications

1. Procédé de commande d'une éolienne, comportant une tour (16), un dispositif de commande pour contrôler opérationnellement 'éolienne ou des parties de celle-ci.

2. Procédé selon la revendication 1, **caractérisé en ce que** le dispositif de détection de l'oscillation de la tour présente au moins un accéléromètre (14).

3. Procédé selon la revendication 1 ou 2, **caractérisé en ce que** la première fréquence propre de la tour est utilisée pour détecter le trajet d'oscillations.

4. Procédé selon l'une des revendications précédentes, **caractérisé en ce que** le réglage du rotor est modifié, lorsque le trajet d'oscillations dépasse une première valeur limite prédéfinie.

5. Procédé selon l'une des revendications 1-3, **caractérisé en ce que** le réglage du rotor est modifié, lorsque le trajet d'oscillations dépasse une valeur limite prédéfinie à l'intérieur d'un intervalle de temps prédéfini.

6. Procédé selon la revendication 5, **caractérisé en ce que** l'intervalle de temps est modifié selon l'ampleur du trajet d'oscillations.

7. Procédé selon l'une des revendications 4-6, **caractérisé en ce que** le rotor est arrêté.

8. Procédé selon l'une des revendications précédentes, **caractérisé en ce qu'**au moins un paramètre pour détecter le trajet d'oscillations est tout d'abord prédéfini et est corrigé pendant le fonctionnement en regard des valeurs de mesures détectées réellement.

9. Procédé selon l'une des revendications précédentes, **caractérisé en ce que** le trajet d'oscillations est détecté pendant un intervalle de temps prédéfini.

10. Éolienne comportant une tour (16) et un dispositif de commande pour contrôler opérationnellement l'éolienne ainsi qu'un dispositif (14) pour détecter le trajet d'oscillations de la tour, dans laquelle des moyens (14) sont prévus, grâce auxquels une oscillation de la tour (16) de l'éolienne est détectée, **caractérisée en ce que** les moyens pour détecter l'oscillation de la tour détectent le trajet d'oscillations ou la déviation absolue de la tour (16) dans la partie supérieure de la tour (16) depuis sa position de repos et les valeurs déterminées par les moyens (14) de détection de l'oscillation de la tour sont traitées dans le dispositif de commande et de sorte que le contrôle opérationnel de l'éolienne ou des parties de celle-ci est modifié, lorsque le trajet d'oscillations ou la déviation absolue de la tour (16) dépasse une première valeur limite prédéfinie, et deux trajets d'oscillations sont détectés dans au moins deux directions différentes dans un plan sensiblement horizontal.

11. Éolienne selon la revendication 10, **caractérisé en ce qu'**un dispositif (14) pour détecter l'accélération de la tour est prévu en tant que dispositif pour détecter le trajet d'oscillations et le trajet d'oscillations de la tour est déterminé à partir de l'accélération détectée.

12. Éolienne selon la revendication 11, **caractérisé par** un dispositif de surveillance du dispositif de détection des accélérations de la tour.
